# EUROPEAN PATENT APPLICATION

(11) **EP 4 002 520 A1**
(43) Date of publication of application: **25.05.2022**
(21) Application number: 20942519.8
(22) Date of filing: 28.10.2020
(51) Int. Cl.: H01M 4/36, H01M 4/505

(54) **POSITIVE ELECTRODE MATERIAL AND PREPARATION METHOD THEREFOR, AND LITHIUM-ION BATTERY**

(30) Priority: 30.06.2020 CN 202010617393
(71) Applicant: SVOLT ENERGY TECHNOLOGY CO., LTD, Changzhou, Jiangsu 213200 (CN)
(72) Inventor: BAI, Yan, hangzhou, Jiangsu 213200 (CN); ZHANG, Shutao, hangzhou, Jiangsu 213200 (CN); PAN, Hailong, hangzhou, Jiangsu 213200 (CN); WANG, Zhuang, hangzhou, Jiangsu 213200 (CN)
(74) Representative: Biggi, Cristina
(86) International application number: PCT/CN2020/124464
(87) International publication number: WO 2022/000889

(57) **Abstract**

The present disclosure provides a cathode material, a method for preparing the cathode material and a lithium ion battery. The method comprises: performing a first sintering treatment on a lithium source material and a cathode precursor material to obtain a first sintered product; and coating a surface of the first sintered product with a coating agent and then performing a second sintering treatment to obtain the cathode material, wherein the coating agent is a nickel source material and/or a manganese source material. A monocrystal-like cathode material is synthesized by selecting the specific coating agent and combining with a secondary sintering process (i.e., first sintering, first coating and second sintering). The monocrystal-like cathode material is formed by primary particle aggregation of a plurality of morphologically similar monocrystal cathode materials. Adoption of the method can reduce side reactions in an electrolyte and particles, improve the cyclic retention ratio and prolong the service of the battery without losing the circulation capacity while simplifying a synthetic process, reducing the energy consumption, improving the yield, canceling a water washing process and reducing residual lithium.

## Description

### Technical Field

The disclosure belongs to the technical field of lithium ion batteries, in particular to a cathode material, a method for preparing the cathode material and a lithium ion battery.

### Background

Lithium ion batteries featuring on high capacity and high energy density are widely applied to electric automobiles, hybrid electric vehicles and energy storage systems. Cathode materials as one of key components of the lithium ion batteries have a great influence on performance of the lithium ion batteries.

In a grinding process of manufacturing an electrode sheet of a conventional secondary spherical cathode material, secondary spherical particles are easily cracked. It leads to quick cycle attenuation and shortened service life of the battery. And an electrolyte and the particles of the cathode material are directly contacted, which could lead to a too high gas production rate, such that safety problems such as bulge happen. The synthetic processes are usually three-sintering processes (i.e., a first sintering, a first coating, a second sintering, a washing and drying, a second coating and a third sintering) and a part of synthetic or second sintering processes (i.e., a first sintering, a washing and drying, a first coating and a second sintering). In the existing process, the coating agent is a conventional coating agent such as a carbon coating agent. In a preparation process of the cathode material, multiple coating and sintering processes and a washing process are needed, which leads to a tedious synthetic process, longer period, large energy consumption, greater loss of intermediate process materials and the like. The process is low in productive rate, has a water pollution problem and causes loss of circulation capacity while residual alkali is washed in the washing process.

In view of the problems, it is necessary to provide a method for preparing a cathode material, wherein the method is short in flow, environmental-friendly and high in productive rate and small in loss of circulation capacity of the cathode material.

### Summary

It is therefore a main object of the present disclosure to provide a cathode material, a method for preparing the cathode material and a lithium ion battery to solve the problem that an existing method for preparing the cathode material is tedious in synthetic process, large in energy consumption, not environmental-friendly and low in productive rate of the cathode material and the loss of circulation capacity is caused.

To achieve the above-mentioned purpose, the present disclosure provides a method for preparing a cathode material, the method including: performing a first sintering treatment on a lithium source material and a cathode precursor material to obtain a first sintered product; and coating a surface of the first sintered product with a coating agent and then performing a second sintering treatment to obtain the cathode material, wherein the coating agent is a nickel source material and/or a manganese source material.

Further, the manganese material source is selected from one or more of groups consisting of Mn(OH)₂, MnO, MnO₂, Mn₂O₃, Mn₃O₄, Mn₂O₇ and MnCO₃; and the nickel source material is selected from one or more of groups consisting of Ni(OH)₂, NiSO₄, NiCO₃, NiF₂, NiCl₂, NiBr₂, NiI₂ and Ni₂O₃.

Further, a ratio of a weight of the first sintered product to a total weight of nickel and manganese in the coating agent is 1: (0.0008-0.0015).

Further, a temperature of the second sintering treatment process ranges from 150°C to 250°C and a treatment time is 4-8 hours.

Further, a temperature of the first sintering treatment process ranges from 700°C to 1000°C and a sintering time is 8-20 hours; and preferably, the temperature of the first sintering treatment process ranges from 800°C to 950°C.

Further, the lithium source material is one or more of groups consisting of lithium hydroxide, lithium carbonate, lithium acetate, lithium oxide, lithium nitrate and lithium oxalate; and the cathode precursor material is a compound represented by a formula NiₐCo_{b}Mn_{c}Al_{d}M_{y}(OH)₂, M being one or more elements of Y, Sr, Mo, La, Al, Zr, Ti, Mg, B, Nb, Ba, Si, P and W, a being 0.5-0.92, b being 0.02-0.06, c being 0.01-0.03, d being 0.01-0.03 and y being 0.00-0.01.

The application further provides a cathode material on the other hand. The cathode material is a monocrystal-like cathode material formed by a plurality of monocrystal particles, a particle size of the monocrystal particles being 0.10-2µm and a particle size D50 of the monocrystal-like cathode material being 2-7.5µm, the cathode material including a lithium cobalt nickel manganese compound oxide and a coating layer coated to the cobalt nickel manganese compound oxide, the coating layer being lithium manganate and/or lithium nickelate formed by sintering a nickel source material and/or a manganese source material; or the cathode material being prepared by the method.

Further, the cathode material is represented by a formula LiₓNiₐCo_{b}Mn_{c}Al_{d}M_{y}R_{z}O₂, wherein x is greater than or equal to 1.00 but less than or equal to 1.35, y is greater than 0 but less than or equal to 0.01, z is greater than 0 but less than or equal to 0.01, a is greater than 0 but less than or equal to 0.92, b is greater than 0 but less than or equal to 0.06, c is greater than 0 but less than or equal to 0.03, d is greater than 0 but less than or equal to 0.03, the sum of a, b, c, d and z is equal to 1, M is one or more elements of Y, Sr, Mo, La, Al, Zr, Ti, Mg, B, Nb, Ba, Si, P and W, and R is Ni and/or Mn.

Further, a particle size D50 of the nickel cobalt manganese lithium aluminate is 2-7.5µm, and a particle size of a particulate matter in the coating layer is 0.01-0.45 µm.

The application further provides a lithium ion battery on yet another aspect. The lithium ion battery includes a cathode material, the cathode material including the cathode material provided by the application.

By applying the technical scheme of the present disclosure, in the method, a monocrystal-like cathode material is synthesized by a specific coating agent and combining with a secondary sintering process (i.e., the first sintering, the first coating and the second sintering). The monocrystal-like cathode material is formed by primary particle aggregation of a plurality of morphologically similar monocrystal cathode materials. The method can reduce side reactions in an electrolyte and particles, improve the cyclic retention ratio and prolong the service of the battery without losing the circulation capacity, while simplifying a synthetic process, reducing the energy consumption, improving the yield, canceling a water washing process (the coating agent is reacted with residual alkali on the surface of the cathode material to generate lithium nickelate or lithium manganate with circulation capacity) and reducing residual lithium.

### Brief Description of the Drawings

Drawings of the description constituting a portion of the present application are used to provide a further understanding to the prevent disclosure; and schematic examples and its specification of the prevent disclosure are intended for explaining the prevent disclosure, and should not be construed to unduly limit this disclosure. In the drawings:

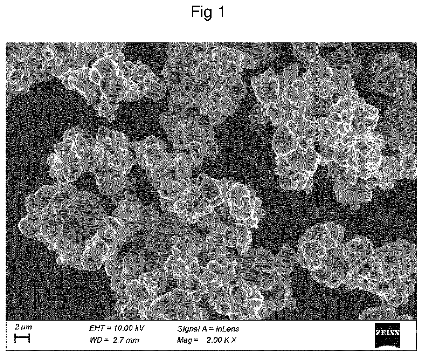

Fig. 1 is an SEM diagram of the monocrystal-like quaternary cathode material synthesized in the embodiment 1.

### Detailed Description of the Embodiments

It should be noted that in the absence of conflict, the embodiments of the present disclosure and features in the embodiments can be combined with one another. Detail description on the present disclosure will be made below in combination with the embodiments.

Just as described in the background art, the existing method for preparing the cathode material has the problem that an existing method for preparing the cathode material is tedious in synthetic process, large in energy consumption, not environmental-friendly and low in productive rate of the cathode material and the loss of circulation capacity is caused. In order to solve the technical problem, the application provides a method for preparing a cathode material, the method including: performing a first sintering treatment on a lithium source material and a cathode precursor material (the precursor material containing nickel cobalt manganese aluminum) to obtain a first sintered product; and coating a surface of the first sintered product with a coating agent and then performing a second sintering treatment to obtain the cathode material, wherein the coating agent is a nickel source material and/or a manganese source material.

In the first sintering treatment process, the lithium source material and the cathode precursor material form the monocrystal-like nickel cobalt manganese lithium oxide; and the coating agent containing the nickel source material and the manganese source material is coated to the surface of the first sintered product and second calcining process is performed. In the second sintering process, residual alkali (Li₂CO₃ and LiOH) on the surface of the monocrystal-like nickel cobalt manganese lithium oxide is chemically reacted with the coating agent to generate lithium manganate and lithium nickelate, while the monocrystal-like cathode material is formed by aggregation of various monocrystal particles. Lithium manganate and lithium nickelate themselves have certain circulation capacities.

In the method, the monocrystal-like cathode material is synthesized by the specific coating agent and combining with a secondary sintering process (i.e., the first sintering, the first coating and the second sintering). The monocrystal-like cathode material is formed by primary particle aggregation of a plurality of morphologically similar monocrystal cathode materials. The method can reduce side reactions in an electrolyte and particles, improve the cyclic retention ratio and prolong the service of the battery without losing the circulation capacity while simplifying a synthetic process, reducing the energy consumption, improving the yield, canceling a water washing process (the coating agent is reacted with residual alkali on the surface of the cathode material to generate lithium nickelate or lithium manganate with circulation capacity) and reducing residual lithium.

The manganese source material and the nickel source material can be a manganese-containing compound or a nickel-containing compound frequently used in the field. In a preferred embodiment, the manganese material source is selected from one or more of groups consisting of Mn(OH)₂, MnO, MnO₂, Mn₂O₃, Mn₃O₄, Mn₂O₇ and MnCO₃; and the nickel source material is selected from one or more of groups consisting of Ni(OH)₂, NiSO₄, NiCO₃, NiF₂, NiCl₂, NiBr₂, NiI₂ and Ni₂O₃.

In a preferred embodiment, a ratio of a weight of the first sintered product to a total weight of nickel and manganese in the coating agent is 1: (0.0008-0.0015). The ratio of the weight of the first sintered product to the total weight of nickel and manganese in the coating agent includes but not limited to the range, and is defined in the range, thereby further reducing the residual alkali amount in the cathode material and refining the particle size of the monocrystal-like particles, and therefore, the cycle performances of the cathode material is further improved and the service life of the cathode material is further prolonged.

The first sintering process and the second sintering process are aerobic sintering processes which can be implemented by apparatuses and processes frequently used in the field. The cathode material prepared by the method has the advantages of simple process, low energy consumption, high productive rate of the cathode material, good cycle performance and the like. In a preferred embodiment, a ratio of mole number of element lithium in the cathode precursor material and the lithium source material is 1: (1.00-1.35). The ratio of mole number of element lithium in the cathode precursor material and the lithium source material is defined in the range, which is favorable to further improve the energy density, the electric capacity and the structural stability of the cathode material.

In the method, the lithium source material and the cathode precursor material can be types frequently used in the field. In a preferred embodiment, the lithium source material is one or more of groups consisting of lithium hydroxide, lithium carbonate, lithium acetate, lithium oxide, lithium nitrate and lithium oxalate; and the cathode precursor material is a compound represented by a formula NiₐCo_{b}Mn_{c}Al_{d}M_{y}(OH)₂, M being one or more elements of Y, Sr, Mo, La, Al, Zr, Ti, Mg, B, Nb, Ba, Si, P and W, a being 0.5-0.92, b being 0.02-0.06, c being 0.01-0.03, d being 0.01-0.03 and y being 0.00-0.01.

In a preferred embodiment, a temperature of the first sintering treatment process ranges from 700°C to 1000°C and a treatment time is 8-20 hours. The temperature and sintering time of the first sintering treatment include but not limited to the range, and are defined in the range, which is further favorable to improve the structural stability of the cathode material. More preferably, the temperature of the first sintering treatment process ranges from 800°C to 950°C.

In a preferred embodiment, the method further includes: a product obtained in the first sintering treatment process is subjected to a first crushing and a first screening treatment to remove particles with particle sizes being greater than or equal to 38 µm to obtain the first sintered product; and a product obtained by the second sintering treatment is subjected to a second crushing and a second screening treatment to remove particles with particle sizes being greater than or equal to 38 µm to obtain the cathode material. The products after first sintering treatment and second sintering treatment are crushed and screened, which is favorable to improve the structural stability and the stability of the electrochemical properties of the cathode material.

The monocrystal-like cathode material formed by aggregation of a plurality of monocrystal particles via the first sintering process and the second sintering process can be formed. In a preferred embodiment, a temperature of the second sintering treatment process ranges from 150°C to 250°C and a treatment time is 4-8 hours. The temperature and the treatment time of the second sintering treatment process are defined in the range, which is further favorable to improve the bonding degree of the coating layer and the nickel cobalt manganese lithium aluminate, such that the structural stability of the cathode material is further improved and the service life of the cathode material is prolonged.

The application further provides a cathode material on the other hand. The cathode material is a monocrystal-like cathode material formed by a plurality of monocrystal particles, a particle size of the monocrystal particles being 100-2000nm and a particle size D50 of the monocrystal-like cathode material being 2-7.5µm, the cathode material including cobalt nickel manganese lithium aluminate and a coating layer coated to the cobalt nickel manganese lithium aluminate, the coating layer being lithium manganate and/or lithium nickelate formed by sintering a nickel source material and/or a manganese source material; or the cathode material being prepared by the method.

The cathode material with the above composition or prepared by the method provided by the method has the advantages of good electrochemical cycle performance, structural stability, long service life and the like. Preferably, the particle size D100 of the monocrystal-like cathode material is less than or equal to 38µm.

In preferred embodiment, a chemical general formula of the cathode material is represented by a formula LiₓNiₐCo_{b}Mn_{c}Al_{d}M_{y}R_{z}O₂, wherein x is greater than or equal to 1.00 but less than or equal to 1.35, y is greater than 0 but less than or equal to 0.01, z is greater than 0 but less than or equal to 0.01, a is greater than 0 but less than or equal to 0.92, b is greater than 0 but less than or equal to 0.06, c is greater than 0 but less than or equal to 0.03, d is greater than 0 but less than or equal to 0.03, the sum of a, b, c, d and z is equal to 1, M is one or more elements of Y, Sr, Mo, La, Al, Zr, Ti, Mg, B, Nb, Ba, Si, P and W and R is an element Ni and/or an element Mn. The cathode material with the above composition can enable elements to exert a great synergistic effect, such that the comprehensive performance of the cathode material is further improved favorably.

Further preferably, a particle size of the nickel cobalt manganese lithium aluminate is 2-7.5µm, and a particle size of a particulate matter in the coating layer is 0.01-0.45 µm.

The application further provides a lithium ion battery on an another aspect. The lithium ion battery includes a cathode material, the cathode material including the cathode material provided by the present discolsure.

The cathode material with the above composition or prepared by the method provided by the method has the advantages of good electrochemical cycle performance, structural stability, long service life and the like. Thus, the lithium ion battery prepared by the cathode material has better electrochemical performance as well.

Further detailed description is made on the application below in combination with specific embodiments, and these embodiments are not construed to limit the protection scope claimed by the application.

### Example 1

(1) A precursor Ni_{0.92}Co_{0.05}Mn_{0.02}Al_{0.01}(OH)₂ and a lithium source are mixed by a dry method, while the precursor and the Li in the lithium source are mixed at a molar ratio of 1: 1.05. Then a first sintering is performed at 850°C for 10 hours in an oxygen atmosphere after, and the product of the first sintering is cooled, crushed and screened by a 400-mesh sieve to obtain the first sintered monocrystal-like cathode material; and
(2) The first sintered monocrystal-like cathode material obtained in the step (1) is uniformly mixed with Mn in the coating agent Mn(OH)₂ at a mass ratio of 1: 0.0008 by a dry method. And a second sintering is performed at 200°C for 6 hours in the oxygen atmosphere. The product of the second sintering is cooled, crushed and screened by the 400-mesh sieve to obtain the monocrystal-like cathode material M-NCMA, a SEM diagram shown in the Fig. 1.

### Example 2

(1) A precursor Ni_{0.92}Co_{0.05}Mn_{0.02}Al_{0.01}(OH)₂ and a lithium source are mixed by a dry method, while the precursor and the Li in the lithium source are mixed at a molar ratio of 1: 1.05. Then a first sintering is conducted at 850°C for 10 hours in an oxygen atmosphere, and the product of the first sintering is cooled, crushed and screened by a 400-mesh sieve to obtain the first sintered monocrystal-like cathode material; and
(2) The first sintered monocrystal-like cathode material obtained in the step (1) is uniformly mixed with Ni in the coating agent Ni(OH)₂ by a dry method, while the precursor and the Li in the lithium source are mixed at a molar ratio of 1: 0.00085. Then a second sintering is performed at 200°C for 6 hours in the oxygen atmosphere, and the mixture is cooled, crushed and screened by the 400-mesh sieve to obtain the final monocrystal-like cathode material M-NCMA.

### Example 3

(1) A precursor Ni_{0.92}Co_{0.05}Mn_{0.02}Al_{0.01}(OH)₂ and a lithium source are mixed by a dry method, while the precursor and the Li in the lithium source are mixed at a molar ratio of 1: 1.05. Then a first sintering is performed at 850°C for 10 hours in an oxygen atmosphere, and the product of the first sintering is cooled, crushed and screened to obtain the first sintered monocrystal-like cathode material; and
(2) The first sintered monocrystal-like cathode material obtained in the step (1) is uniformly mixed with Mn and Ni in the coating agents Mn(OH)₂ and Ni(OH)₂ at a mass ratio of 1: 0.0004 and 1: 0.000425 by a dry method. And a second sintering is performed at 200°C for 6 hours in the oxygen atmosphere. The product of the second sintering mixture is cooled, crushed and screened to obtain the final monocrystal-like cathode material MN-NCMA.

### Example 4

A difference between the example 4 and the example 2 is as follows: the first sintered monocrystal-like cathode material is uniformly mixed with the element Ni in the coating agent Ni(OH)₂ at a mass ratio of 1: 0.0015 by a dry method.

### Example 5

A difference between the example 5 and the example 2 is as follows: the first sintered monocrystal-like cathode material is uniformly mixed with the element Ni in the coating agent Ni(OH)₂ at a mass ratio of 1: 0.0025 by a dry method.

### Example 6

A difference between the example 6 and the example 2 is as follows: a ratio of mole number of element lithium in the cathode precursor material and the lithium source material is 1: 1.35.

### Example 7

A difference between the example 7 and the example 2 is as follows: a ratio of mole number of element lithium in the cathode precursor material and the lithium source material is 1: 0.8.

### Example 8

A difference between the example 8 and the example 2 is as follows: a ratio of mole number of element lithium in the cathode precursor material and the lithium source material is 1: 1.6.

### Example 9

A difference between the example 9 and the example 2 is as follows: the first sintering temperature is 950°C.

### Example 10

A difference between the example 10 and the example 2 is as follows: the first sintering temperature is 1050°C.

### Example 11

A difference between the example 11 and the example 2 is as follows: the second sintering temperature is 150°C.

### Example 12

A difference between the example 12 and the example 2 is as follows: the second sintering temperature is 250°C.

### Example 13

A difference between the example 13 and the example 2 is as follows: the second sintering temperature is 300°C.

### Example 14

A difference between the example 14 and the example 2 is as follows: after the first sintering process, the mixture is screened by a 200-mesh sieve after being crushed and screened, and the second sintering process is conducted directly.

### Example 15

A difference between the example 15 and the example 2 is as follows: after the first sintering process, the mixture is screened by a 200-mesh sieve after being crushed and screened, and the mixture is not crushed and screened after the second sintering process is conducted.

### Comparative example 1

(1) A precursor Ni_{0.92}Co_{0.05}Mn_{0.02}Al_{0.01}(OH)₂ and a lithium source are mixed by a dry method, while Li in the precursor and the lithium source are mixed at a molar ratio of 1: 1.05. Then a first sintering is performed at 850°C for 10 hours in an oxygen atmosphere, and the product of the first sintering is cooled, crushed and screened to obtain the first sintered monocrystal-like cathode material.

### Comparative example 2

(1) A precursor Ni_{0.92}Co_{0.05}Mn_{0.02}Al_{0.01}(OH)₂ and a lithium source are mixed by a dry method, while Li in the precursor and the lithium source are mixed according to a molar ratio of 1: 1.05. Then a first sintering is performed at 850°C for 10 hours in an oxygen atmosphere, and the product of the first sintering is cooled, crushed and screened to obtain the first sintered monocrystal-like cathode material; and
(2) The first sintered monocrystal-like cathode material obtained in the step (1) is mixed with water at a mass ratio of 1: 1, and a mixture is washed for 5 min while being stirred by a stirrer at 600 r/min. Then a vacuum drying is then performed in a 150°C electric heating oven for 8 hours or over, and the dried material is mixed uniformly with the Mn in the coating agent Mn(OH)₂ at a mass ratio of 1: 0.012 by a dry method. A second sintering is performed at 200°C for 6 hours in an oxygen atmosphere. A product of the second sintering is cooled, crushed and screened to obtain the final monocrystal-like cathode material.

The residual alkali of the synthesized monocrystal quaternary cathode material in the examples and comparative example 1 are shown in a table 1 and electrical property of the synthesized monocrystal quaternary cathode material is shown in a table 2.

**Table 1**

| | Stage | Li₂CO₃ (%) | LiOH (%) | Total alkali (%) |
|---|---|---|---|---|
| Example 1 | M-NCMA | 0.05 | 0.12 | 0.17 |
| Example 2 | N-NCMA | 0.06 | 0.11 | 0.17 |
| Example 3 | MN-NCMA | 0.05 | 0.13 | 0.18 |
| Example 4 | Second sintered product | 0.05 | 0.13 | 0.18 |
| Example 5 | Second sintered product | 0.06 | 0.13 | 0.19 |
| Example 6 | Second sintered product | 0.06 | 0.15 | 0.21 |
| Example 7 | Second sintered product | 0.05 | 0.14 | 0.19 |
| Example 8 | Second sintered product | 0.07 | 0.17 | 0.24 |
| Example 9 | Second sintered product | 0.04 | 0.13 | 0.17 |
| Example 10 | Second sintered product | 0.04 | 0.11 | 0.15 |
| Example 11 | Second sintered product | 0.17 | 0.99 | 1.16 |
| Example 12 | Second sintered product | 0.06 | 0.12 | 0.18 |
| Example 13 | Second sintered product | 0.09 | 0.75 | 0.84 |
| Example 14 | Second sintered product | 0.18 | 0.14 | 0.32 |
| Example 15 | Second sintered product | 0.19 | 0.19 | 0.38 |
| Comparative example 1 | First sintered product | 0.16 | 1.03 | 1.19 |
| Comparative example 2 | Washed and dried | 0.04 | 0.07 | 0.11 |
| | Second sintered product | 0.05 | 0.08 | 0.13 |

It can be seen from the table 1 that the content of the residual alkali in the comparative example 1 is higher, but the contents of the residual alkali after first coating and second sintering in the examples 1 to 15 are reduced obviously. The reason is that the residual alkali (Li₂CO₃ and LiOH) on the surface of the monocrystal-like cathode material is chemically reacted with the coating agents Mn(OH)₂ and Ni(OH)₂ to generate lithium manganate and lithium nickelate, and lithium manganate and lithium nickelate themselves have certain circulation capacities.

A button battery is manufactured: by utilizing the cathode materials manufactured by the examples 1-15 and the comparative examples 1 and 2 respectively, the cathode material, a carbon black conducting agent and binders PVDF and NMP at a weight ratio of 95: 2.5: 2.5: 5 are mixed uniformly to prepare battery cathode slurry. The slurry is coated to an aluminum foil which is 20-25µm thick, the aluminum foil is subjected to vacuum drying and rolling to prepare a cathode piece. A lithium metal piece is taken as an anode. The electrolyte is prepared by dissolving a 1.5 mol lithium hexafluorophosphate (LiPF₆) in a 1L of ethylene carbonate (EC) and dimethyl carbonate (DMC) mixed solvent, wherein the volume ratio of EC and DMC in the mixed solvent is 1: 1, and the button battery is assembled.

The electrochemical property test of the material is carried out at 25°C by adopting an LAND battery test system, and the test voltage range is 3V-4.5V; and the first time specific charge and discharge capacity and 50-week capacity retention ratio are tested. A test result is as shown in the table 2.

**Table 2**

| | Specific charge capacity (mAh/g) | Specific discharge capacity (mAh/g) | First effect (%) | 50-week cycle retention rate (%) |
|---|---|---|---|---|
| Example 1 | 231.2 | 218.9 | 94.69 | 98.58 |
| Example 2 | 230.3 | 217.7 | 94.54 | 98.18 |
| Example 3 | 231.3 | 219.7 | 95 | 97.18 |
| Example 4 | 235.7 | 214.1 | 90.84 | 95.02 |
| Example 5 | 235.7 | 211.3 | 89.63 | 91.86 |
| Example 6 | 232.2 | 216.5 | 93.24 | 96.35 |
| Example 7 | 224.7 | 193.8 | 86.27 | 80.01 |
| Example 8 | 224.8 | 196.1 | 87.24 | 80.38 |
| Example 9 | 229.9 | 215.1 | 93.56 | 93.02 |
| Example 10 | 229.2 | 199.5 | 87.04 | 81.72 |
| Example 11 | 232.3 | 216.4 | 93.15 | 96.24 |
| Example 12 | 231.2 | 216.8 | 93.77 | 96.33 |
| Example 13 | 223 | 192.2 | 86.19 | 79.94 |
| Example 14 | 219 | 186.1 | 84.98 | 75.16 |
| Example 15 | 216 | 180.6 | 83.61 | 70.54 |
| Comparative example 1 | 232.4 | 197.6 | 85.03 | 87.00 |
| Comparative example 2 | 229.2 | 193.3 | 85.61 | 87.15 |

It can be known according to electrical properties of the examples 1-15 and the comparative examples 1 and 2 in the table 2 that the electric circulation capacities are not lost while the residual alkali of the cathode materials in the examples 1-15 are reduced. In the comparative example 2, although the residual alkali is reduced by washing, the specific capacity is lower. The reason is that the residual alkali on the surface of the cathode material is washed in the washing process, which leads to reduction of content of lithium in the cathode material. Even if the surface is coated with the Mn(OH)₂, lithium manganate cannot be generated, such that the loss of electric circulation capacity is caused by washing. Moreover, it can be known from the cycle retention rate in the table 2 that the examples 1-3 have higher cycle retention rates.

It can be seen from the above description that the above-mentioned examples achieve the following technical effects:
It can be known by comparing the examples 1-5 that the ratio of the first sintered monocrystal-like cathode material to the sum of weight of the elements Ni and Mn in the coating agent is defined in the preferred range of the application, which is favorable to improve the comprehensive performance of the cathode material.

It can be known by comparing the examples 1, 6 and 8 that the ratio of mole number of element lithium in the cathode precursor material and the lithium source material is defined in the preferred range of the application, which is favorable to improve the comprehensive performance of the cathode material.

It can be known by comparing the examples 1, 9 and 13 that the temperatures of the first sintering process and the second sintering process are defined in the preferred range of the application, which is favorable to improve the comprehensive performance of the cathode material.

It can be known by comparing the examples 1, 14 and 15 that the screening particle sizes after the first sintering process and the second sintering process are defined in the preferred range of the application, which is favorable to improve the comprehensive performance of the cathode material.

It should be noted that terms "first", "second" and the like in the description and claims of the application are used for distinguishing similar objects and not have to describe a specific sequence or precedence order. It should be understood that terms used in this way can be interchanged, such that the embodiments of the application described herein can be, for example, implemented in sequences except those described herein.

The foregoing is merely illustrative of the preferred embodiments of the present disclosure and is not intended to be limiting of the present disclosure, and for those skilled in the art, the present disclosure may have various changes and modifications. Any modifications, equivalent substitutions, improvements, and the like within the spirit and principles of the disclosure are intended to be included within the scope of the present disclosure.

## Claims

1. A method for preparing a cathode material, comprising:
performing a first sintering treatment on a lithium source material and a cathode precursor material to obtain a first sintered product; and
coating a surface of the first sintered product with a coating agent and then performing a second sintering treatment to obtain the cathode material, wherein the coating agent is a nickel source material and/or a manganese source material.

2. The method according to claim 1, wherein the manganese material source is selected from one or more of groups consisting of Mn(OH)₂, MnO, MnO₂, Mn₂O₃, Mn₃O₄, Mn₂O₇ and MnCO₃; and the nickel source material is selected from one or more of groups consisting of Ni(OH)₂, NiSO₄, NiCO₃, NiF₂, NiCl₂, NiBr₂, NiI₂ and Ni₂O₃.

3. The method according to claim 1 or 2, wherein a ratio of a weight of the first sintered product to a total weight of nickel and manganese in the coating agent is 1: (0.0008-0.0015).

4. The method according to claim 3, wherein a temperature of the second sintering treatment process ranges from 150°C to 250°C and a treatment time is 4-8 hours.

5. The method according to any one of claims 1-4, wherein a temperature of the first sintering treatment process ranges from 700°C to 1000°C and a sintering time is 8-20 hours; and
preferably, the temperature of the first sintering treatment process ranges from 800°C to 950°C.

6. The method according to claim 1, wherein the lithium source material is one or more of groups consisting of lithium hydroxide, lithium carbonate, lithium acetate, lithium oxide, lithium nitrate and lithium oxalate; and the cathode precursor material is a compound represented by a formula NiₐCo_{b}Mn_{c}Al_{d}M_{y}(OH)₂, M being one or more elements of Y, Sr, Mo, La, Al, Zr, Ti, Mg, B, Nb, Ba, Si, P and W, a being 0.5-0.92, b being 0.02-0.06, c being 0.01-0.03, d being 0.01-0.03 and y being 0.00-0.01.

7. A cathode material, wherein the cathode material is a monocrystal-like cathode material formed by a plurality of monocrystal particles, a particle size of the monocrystal particles being 0.10-2µm and a particle size D50 of the monocrystal-like cathode material being 2-7.5µm, the cathode material comprising a lithium cobalt nickel manganese compound oxide and a coating layer coated to the cobalt nickel manganese compound oxide, the coating layer being lithium manganate and/or lithium nickelate formed by sintering a nickel source material and/or a manganese source material; or the cathode material being prepared by the method according to any one of claims 1-6.

8. The cathode material according to claim 7, wherein the cathode material is represented by a formula LiₓNiₐCo_{b}Mn_{c}Al_{d}M_{y}R_{z}O₂, wherein x is greater than or equal to 1.00 but less than or equal to 1.35, y is greater than 0 but less than or equal to 0.01, z is greater than 0 but less than or equal to 0.01, a is greater than 0 but less than or equal to 0.92, b is greater than 0 but less than or equal to 0.06, c is greater than 0 but less than or equal to 0.03, d is greater than 0 but less than or equal to 0.03, the sum of a, b, c, d and z is equal to 1, M is one or more elements of Y, Sr, Mo, La, Al, Zr, Ti, Mg, B, Nb, Ba, Si, P and W, and R is Ni and/or Mn.

9. The cathode material according to claim 7, wherein a particle size D50 of the nickel cobalt manganese lithium aluminate is 2-7.5µm, and a particle size of a particulate matter in the coating layer is 0.01-0.45µm.

10. A lithium ion battery, comprising the cathode material, wherein the cathode material comprises the cathode material according to any one of claims 7-9.
